# EUROPÄISCHE PATENTSCHRIFT

(11) **EP 3 335 024 B1**
(45) Veröffentlichungstag und Bekanntmachung des Hinweises auf die Patenterteilung: **08.05.2019**
(21) Anmeldenummer: 16730818.8
(22) Anmeldetag: 17.06.2016
(51) Int. Cl.: G01M 13/04

(54) **SYSTEM UND VERFAHREN ZUR ÜBERWACHUNG DER BELASTUNG VON LAGERN EINES ANTRIEBS EINES WASSERFAHRZEUGS SOWIE WASSERFAHRZEUG**
SYSTEM AND METHOD FOR MONITORING THE LOAD OF A DRIVE OF A WATER VEHICLE AND WATER VEHICLE
SYSTEME ET PROCEDE DE SURVEILLANCE DE LA CHARGE SUR LES PALIERS DE LIGNE D'ARBRE D'UN BATEAU ET BATEAU

(30) Priorität: 10.08.2015 EP 15180386
(43) Veröffentlichungstag der Anmeldung: 20.06.2018
(73) Patentinhaber: Siemens Aktiengesellschaft, 80333 München (DE)
(72) Erfinder: JUNGIEWICZ, Artur, 13086 Berlin (DE)
(86) Internationale Anmeldenummer: PCT/EP2016/064010
(87) Internationale Veröffentlichungsnummer: WO 2017/025231

(56) Entgegenhaltungen:
- EP-A1- 2 446 998
- US-A- 5 224 380
- BOEHM J ET AL: "SENSORS FOR MAGNETIC BEARINGS", IEEE TRANSACTIONS ON MAGNETICS, IEEE SERVICE CENTER, NEW YORK, NY, US, Bd. 29, Nr. 6, 1. November 1993 (1993-11-01), Seiten 2962-2964, XP000432367, ISSN: 0018-9464, DOI: 10.1109/20.280903

## Beschreibung

Die Erfindung betrifft ein System und ein Verfahren zur Überwachung der Belastung von Lagern eines Antriebs eines Wasserfahrzeugs. Die Erfindung betrifft weiterhin ein Wasserfahrzeug mit einem solchen System.

An Antriebe für Wasserfahrzeuge, insbesondere Marineschiffe und U-Boote, werden höchste Anforderungen hinsichtlich der mechanischen Belastung insbesondere bei Seegang oder Manövern gestellt. Dabei wurde der Zustand der Antriebslager bisher nur durch visuelle Inspektionen begutachtet. Dies erfordert jedoch, dass die Lager auseinandergebaut werden, um an die kritischen Komponenten, wie z.B. Lagerschalen, zu gelangen.

Die Offenlegungsschrift EP 2 446 998 A1 beschreibt eine Spindelzustandserkennungsvorrichtung für eine Werkzeugmaschine, welche eine Lagerbelastungserfassungseinrichtung zum Erfassen einer Last auf ein Lager, das eine Spindel der Werkzeugmaschine drehbar trägt, umfasst. Darüber hinaus umfasst die Spindelzustandserkennungsvorrichtung Verbrauchsverhältnisberechnungsmittel, um, ausgehend von der durch das Lagerlasterfassungsmittel erfassten Last, ein vorliegendes Verbrauchsverhältnis zu berechnen, das ein Verbrauchsverhältnis des Lagers mit Bezug auf eine vorbeschriebene Lebensdauer des Lagers ist, das über einen Zeitraum bis zu einem gegenwärtigen Zeitpunkt erreicht wird.

Die Patentschrift US 5 224 380 A beschreibt einen supraleitenden Sechsachs-Beschleunigungsmesser zur Messung der Linear- und Winkelbeschleunigung einer supraleitenden Proofmasse in allen sechs Freiheitsgraden am selben Punkt der Raumzeit. Die wissenschaftliche Publikationsschrift XP000432367 beschreibt einen einfachen Wirbelstromsensor, der auf Levitation anwendbar ist.

Der Erfindung liegt die Aufgabe zugrunde, eine zuverlässige Überwachung der Lagerbelastung im Betrieb eines Wasserfahrzeugs zu gewährleisten.

Die Aufgabe wird erfindungsgemäß gelöst durch ein System zur Überwachung der Belastung von Lagern eines Antriebs eines Wasserfahrzeugs, insbesondere eines Schiffes oder U-Boots, wobei mit Hilfe der Lager ein Motorgehäuse des Antriebs auf einer Antriebswelle gelagert ist, umfassend:
- mindestens einen Beschleunigungssensor zur Messung von Beschleunigungen in drei orthogonale Richtungen sowie von drei Winkelbeschleunigungen des Antriebs,
- pro untersuchtes Lager mindestens einen Abstandssensor zur Bestimmung einer relativen Position einer Antriebswelle zu einem Lagergehäuse des jeweiligen Lagers,
- eine Auswerteinheit, die dafür ausgebildet ist anhand von Daten des Beschleunigungssensors unter Kenntnis des Gewichts des Antriebs die auf das jeweilige Lager wirkenden Kräfte zu berechnen und anhand der Messung des Abstandssensors eine Verteilung dieser Kräfte auf die Lager des Antriebs zu bestimmen.

Die Aufgabe wird weiterhin erfindungsgemäß gelöst durch ein Verfahren zur Überwachung der Belastung von Lagern eines Antriebs eines Wasserfahrzeugs, insbesondere eines Schiffes oder U-Boots, bei dem
- Daten über Beschleunigungen in drei orthogonale Richtungen sowie über drei Winkelbeschleunigungen mit Hilfe mindestens eines Beschleunigungssensors gesammelt werden,
- pro untersuchtes Lager mit Hilfe mindestens eines Abstandssensors die relative Position einer Antriebswelle zu einem Lagergehäuse des jeweiligen Lagers bestimmt wird, und
- in einer Auswerteeinheit anhand der Daten des Beschleunigungssensors unter Kenntnis des Gewichts der Antriebs die auf das jeweilige Lager wirkenden Kräfte berechnet werden und anhand der Messung des Abstandssensors eine Verteilung dieser Kräfte auf die Lager des Antriebs bestimmt wird.

Die Aufgabe wird schließlich durch ein Wasserfahrzeug mit einem solchen System gelöst.

Die in Bezug auf das System nachstehend angeführten Vorteile und bevorzugten Ausgestaltungen lassen sich sinngemäß auf das Verfahren und das Wasserfahrzeug übertragen.

Die erfindungsgemäße Lösung sieht vor, dass mindestens ein Beschleunigungssensor im Inneren des Wasserfahrzeugs installiert wird, über welchen dynamische Änderungen der Lage des Antriebs infolge von Seegang oder Manövern (z.B. beim Tauchvorgang eines U-Boots) registriert werden. Es werden dabei Beschleunigungen in drei translatorische und drei rotatorische Richtungen gemessen, um möglichst ausführliche Informationen über die Beschleunigungen in alle Bewegungsfreiheitsgrade zu erhalten.

Zu diesem Zweck sind in der Auswerteeinheit Daten zumindest über das Gewicht, insbesondere zusätzlich auch über die Geometrie des Antriebs erfasst. Mittels der Beschleunigungen unter Kenntnis des Gewichts des Antriebs werden die Massenkräfte, insbesondere zwischen dem Rotor und den Lagern, berechnet. Unter Gewicht des Antriebs wird hierbei nicht nur das Gesamtgewicht der Antriebs verstanden, sondern auch das Gewicht der einzelnen Antriebskomponenten, die für die Berechnung der Massenkräfte relevant sind. Die Informationen über die Geometrie sind für die Berechnung der Massenträgheitsmomente des Rotors relevant. Auf diese Weise ist eine dynamische und präzise Berechnung der Lagerkräfte gewährleistet. Insbesondere werden dadurch die Richtung, die Höhe und die Häufigkeit der Lagerkraftänderungen im Betrieb bestimmt.

Parallel dazu wird an den untersuchten Lagern über Abstandssensoren die relative Position der Antriebsachse zum Lagergehäuse erfasst. Hierdurch kann eine Aussage über die Verteilung der Lagerkräfte getroffen werden, d.h. welches Lager mit welcher Kraft zum jeweiligen Zeitpunkt belastet wird.

Beide o.g. Messungen erfolgen insbesondere kontinuierlich im Betrieb des Wasserfahrzeugs. Die gemessenen translatorischen Beschleunigungen und Winkelbeschleunigungen des Antriebs sowie die relativen Position der Antriebsachse werden in die Auswerteeinheit eingespeist, welche, wie oben beschrieben, eine dynamische und präzise Berechnung der Lagerkräfte bzw. einer Lagerkraftänderung über die Zeit durchführt. Informationen, die in der Auswerteeinheit eingespeist oder solche, die mit Hilfe der Auswerteeinheit berechnet werden, werden z.B. einem Benutzer angezeigt, für weitere Datenverarbeitung sofort herangezogen oder gespeichert oder in eine Steuerung des Antriebs eingespeist.

Gemäß einer bevorzugten Ausführung ist ein sechsachsiger Beschleunigungssensor zur Messung der Beschleunigungen des Antriebs vorgesehen. Die Messung der Beschleunigungen in alle Freiheitsgrade erfolgt somit über einen einzigen Sensor, so dass eine besonders platzsparende Ausführung vorliegt.

Vorzugsweise ist der Beschleunigungssensor an einem unbeweglichen Teil des Antriebs, insbesondere an einem Stator angeordnet. Eine Anordnung am Stator oder einem anderen unbeweglichen Teil des Antriebs ist aus konstruktiven Gründen vorteilhaft: der Sensor wird mit elektrischem Strom versorgt und die Sensordaten werden an die Auswerteeinheit übertragen, deshalb ist es von Vorteil den Beschleunigungssensor an einem stationären Teil anzubringen.

Gemäß einer weiteren bevorzugten Ausführung sind pro untersuchtes Lager zwei Wirbelstromsensoren zur Abstandsmessung vorgesehen. Wirbelstromsensoren gehören zur Klasse der berührungslosen Abstandssensoren. Das namensgebende Messprinzip ermöglicht die Bestimmung des Abstands zu leitfähigen Messobjekten. Als Besonderheit dieser Messtechnik nimmt das Vorhandensein von nicht leitfähigen Medien wie Öl, Wasser oder Kühlmittel keinen Einfluss auf das Messergebnis. Aufgrund dieser Eigenschaft sind Wirbelstromsensoren für den Einsatz im rauen industriellen Umfeld besonders geeignet. Zudem eignen sich Wirbelstromsensoren hervorragend zur Beobachtung dynamischer Vorgänge. Sie zeichnen sich durch Robustheit, hohe Dynamik und hohe Auflösung aus. Darüber hinaus können sie über ein breites Temperaturspektrum angewendet werden. Der Einsatz von zwei Wirbelstromsensoren, die in der Regel in einem Winkel von 90° zueinander angeordnet sind, ist erforderlich, um den Abstand zwischen der Antriebswelle und des Lagergehäuses mehrdimensional erfassen zu können.

Vorzugsweise ist die Auswerteeinheit dafür ausgebildet, aufgrund der Informationen über die Belastung der Lager eine Lebensdauerabschätzung der Lager herauszugeben. Mittels der gewonnen Informationen über die Lagerkraftänderungen werden insbesondere sogenannte Lastkollektiven aufgestellt, welche mit Abnutzungsdaten des Lagerherstellers verglichen werden, um eine zuverlässige Lebensdauerabschätzung der Lager zu ermöglichen. Mit Lastkollektiv wird hierbei die Gesamtheit aller aufgetretenen Schwingungsamplituden über einen Zeitraum bezeichnet. Schwingende Belastungen treten in der Realität selten einstufig, also mit nur einer einzigen Amplitude auf. Im Regelfall sind es viele unterschiedliche Amplituden ohne feste Reihenfolge. Wenn man diese so genannte Beanspruchungs-Zeit-Funktion auswertet, so erhält man eine Beschreibung dieser Funktion in Form der Häufigkeiten der aufgetretenen Lasten. Diese Lastkollektiven werden dann für die Abschätzung der Lebensdauer des jeweiligen Lagers herangezogen.

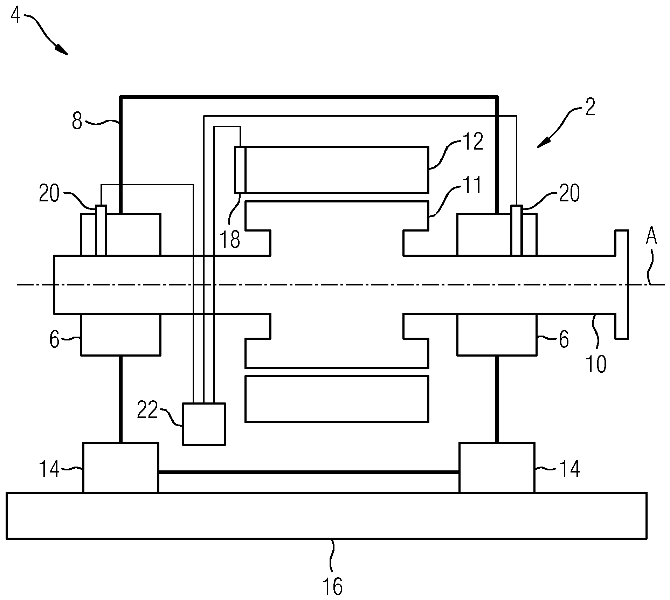

Ein Ausführungsbeispiel der Erfindung wird anhand einer Zeichnung näher erläutert. Hierin zeigt die einzige Figur schamtisch und stark vereinfacht den Antrieb 2 eines nicht näher dargestellten Schiffes oder U-Boots. Dem Antrieb 2 ist ein System 4 zur Überwachung der Belastung von Lagern 6, mit deren Hilfe ein Motorgehäuse 8 auf einer Antriebswelle 10 gelagert ist, zugeordnet. Die Antriebswelle 10 ist im gezeigten Ausführungsbeispiel als ein Rotor 11 ausgebildet und erstreckt sich entlang einer Wellenachse A. Aus der Figur ist ein Abschnitt der Antriebswelle 10 gezeigt. Die gesamte Antriebswelle umfasst mehrere Rotoren 11, die zu einem s.g. Antriebsstrang zusammengesetzt sind.

Der Antrieb 2 umfasst weiterhin einen innerhalb des Motorgehäuses 8 angeordneten Stator 12. Das Motorgehäuse 8 ist über Aufstellungselemente 14 auf einem Fundament 16 gestützt.

Das System 4 umfasst einen sechsachsigen Beschleunigungssensor 18 zur Messung von Beschleunigungen des Antriebs 2 in drei orthogonale Richtungen sowie von drei Winkelbeschleunigungen. Auf diese Weise werden Informationen über die Beschleunigungen bzw. auf das jeweilige Lager 6 wirkende Kräfte in alle Freiheitsgrade gewonnen. Dabei ist für den gesamten Antriebsstrang nur ein Beschleunigungssensor 18 erforderlich.

Das System 4 umfasst weiterhin pro Lager 6 je zwei Wirbelstromsensoren, die in der Figur als eine Einheit dargestellt und mit dem Bezugszeichen 20 versehen sind. Die Wirbelstromsensoren messen den Abstand zwischen der Antriebswelle 10 und einem nicht näher gezeigten Lagergehäuse der Lager 6. Mit dem Bezugszeichen 20 ist somit im Allgemeinen ein Abstandssensor bezeichnet.

Schließlich umfasst das System 4 auch eine Auswerteeinheit 22, in welche die Messedaten des Beschleunigungssensors 18 und den Wirbelstromsensoren 20 zur Auswertung eingespeist werden. In der Auswerteeinheit 22 werden die Daten über die Beschleunigungen und der relativen Position des Rotors 11 bzw. Antriebswelle 10 zu den Lagerschalen der Lager 6 verarbeitet, um Informationen über die auf die Lager 6 wirkenden Kräfte im Betrieb des Wasserfahrzeugs zu gewinnen. Insbesondere werden die Richtung, die Höhe und die Häufigkeit der Lagerkraftänderungen bestimmt. Diese Daten werden mit Herstellerdaten über die Belastbarkeit der Lager 6 verglichen, damit eine Aussage über die Lebensdauer der Lager treffen zu können, ohne dass dafür eine Demontage der Lager erforderlich ist.

## Patentansprüche

1. System (4) zur Überwachung der Belastung von Lagern (6) eines Antriebs (2) eines Wasserfahrzeugs, insbesondere eines Schiffes oder U-Boots, wobei mit Hilfe der Lager (6) ein Motorgehäuse (8) des Antriebs (2) auf einer Antriebswelle (10) gelagert ist, umfassend:
- mindestens einen Beschleunigungssensor (18) zur Messung von Beschleunigungen in drei orthogonale Richtungen sowie von drei Winkelbeschleunigungen des Antriebs (2),
- pro untersuchtes Lager (6) mindestens einen Abstandssensor (20) zur Bestimmung einer relativen Position der Antriebswelle (10) zu einem Lagergehäuse des jeweiligen Lagers (6),
- eine Auswerteeinheit (22), die dafür ausgebildet ist anhand von Daten des Beschleunigungssensors (18) unter Kenntnis des Gewichts des Antriebs (2) die auf das jeweilige Lager (6) wirkenden Kräfte zu berechnen und anhand der Messung des Abstandssensors (20) eine Verteilung dieser Kräfte auf die Lager (6) des Antriebs (2) zu bestimmen.

2. System (4) nach Anspruch 1, wobei ein sechsachsiger Beschleunigungssensor (18) zur Messung der Beschleunigungen des Antriebs (2) vorgesehen ist.

3. System (4) nach Anspruch 2, wobei der Beschleunigungssensor (18) an einem unbeweglichen Teil des Antriebs (2), insbesondere an einem Stator (12) angeordnet ist.

4. System (4) nach einem der vorhergehenden Ansprüche, wobei pro untersuchtes Lager (6) zwei Wirbelstromsensoren zur Abstandsmessung vorgesehen sind.

5. System (4) nach einem der vorhergehenden Ansprüche, wobei die Auswerteeinheit (22) dafür ausgebildet ist, aus den erfassten Informationen über Lagerkraftänderungen unter Einbeziehung von Abnutzungsdaten eine Lebensdauerabschätzung der Lager (6) herauszugeben.

6. Verfahren zur Überwachung der Belastung von Lagern (6) eines Antriebs (2) eines Wasserfahrzeugs, insbesondere eines Schiffes oder U-Boots, bei dem
- Daten über Beschleunigungen in drei orthogonale Richtungen sowie über drei Winkelbeschleunigungen des Antriebs (2) mit Hilfe mindestens eines Beschleunigungssensors (18) gesammelt werden,
- pro untersuchtes Lager (6) mit Hilfe mindestens eines Abstandssensors (20) die relative Position einer Antriebswelle (10) zu einem Lagergehäuse des jeweiligen Lagers (6) bestimmt wird, und
- in einer Auswerteeinheit (22) anhand der Daten des Beschleunigungssensors (18) unter Kenntnis des Gewichts des Antriebs (2) die auf das jeweilige Lager (6) wirkenden Kräfte berechnet werden und anhand der Messung des Abstandssensors (20) eine Verteilung dieser Kräfte auf die Lager (6) des Antriebs (2) bestimmt wird.

7. Verfahren nach Anspruch 6, wobei die Daten über die Beschleunigungen mittels eines sechsachsigen Beschleunigungssensors (18) gesammelt werden.

8. Verfahren nach Anspruch 7, wobei der Beschleunigungssensor (18) an einem unbeweglichen Teil des Antriebs (2), insbesondere an einem Stator (12) die Daten über die Beschleunigungen erfasst.

9. Verfahren nach einem der Ansprüche 6 bis 8, wobei pro untersuchtes Lager (6) zwei Wirbelstromsensoren zur Abstandsmessung eingesetzt werden.

10. Verfahren nach einem der Ansprüche 6 bis 9, wobei aus den erfassten Informationen über Lagerkraftänderungen unter Einbeziehung von Abnutzungsdaten mittels der Auswerteeinheit (22) eine Lebensdauerabschätzung der Lager (6) erfolgt.

11. Wasserfahrzeug mit einem System (4) nach einem der Ansprüche 1 bis 5.

## Claims

1. System (4) for monitoring the load of bearings (6) of a drive (2) of a water vehicle, in particular a ship or submarine, wherein with the aid of the bearings (6) a motor housing (8) of the drive (2) is mounted on a drive shaft (10), comprising:
- at least one acceleration sensor (18) for measuring accelerations in three orthogonal directions as well as of three angular accelerations of the drive (2),
- for each examined bearing (6), at least one distance sensor (20) for determining a relative position of the drive shaft (10) in relation to a bearing housing of the respective bearing (6),
- an evaluation unit (22), which is embodied to use data of the acceleration sensor (18), with the knowledge of the weight of the drive (2), to calculate the forces acting on the respective bearing (6) and to use the measurement of the distance sensor (20) to determine a distribution of said forces on the bearing (6) of the drive (2).

2. System (4) according to claim 1, wherein a six-axis acceleration sensor (18) is provided for measuring the accelerations of the drive (2).

3. System (4) according to claim 2, wherein the acceleration sensor (18) is arranged on an immobile part of the drive (2), in particular on a stator (12).

4. System (4) according to one of the preceding claims, wherein for each examined bearing (6) two eddy current sensors are provided for measuring distance.

5. System (4) according to one of the preceding claims, wherein the evaluation unit (22) is embodied to issue a service life estimation for the bearing (6) from the acquired information regarding bearing force changes while taking into account wear data.

6. Method for monitoring the load of bearings (6) of a drive (2) of a water vehicle, in particular a ship or submarine, in which
- data regarding accelerations in three orthogonal directions as well as regarding three angular accelerations of the drive (2) is collected with the aid of at least one acceleration sensor (18),
- for each examined bearing (6), the relative position of a drive shaft (10) in relation to a bearing housing of the respective bearing (6) is determined with the aid of at least one distance sensor (20), and
- in an evaluation unit (22), the data of the acceleration sensor (18) is used, with the knowledge of the weight of the drive (2), to calculate the forces acting on the respective bearing (6) and the measurement of the distance sensor (20) is used to determine a distribution of said forces on the bearing (6) of the drive (2).

7. Method according to claim 6, wherein the data regarding the accelerations is collected by means of a six-axis acceleration sensor (18).

8. Method according to claim 7, wherein the acceleration sensor (18) acquires the data regarding the accelerations at an immobile part of the drive (2), in particular at a stator (12) .

9. Method according to one of claims 6 to 8, wherein for each examined bearing (6) two eddy current sensors are used for measuring distance.

10. Method according to one of claims 6 to 9, wherein a service life estimation takes place for the bearing (6) by means of the evaluation unit (22) from the acquired information regarding bearing force changes while taking into account wear data.

11. Water vehicle with a system (4) according to one of claims 1 to 5.

## Revendications

1. Système (4) de contrôle de la charge sur des paliers (6) d'une propulsion (2) d'un bâtiment de navigation sur l'eau, notamment d'un bateau ou d'un sous-marin, dans lequel, à l'aide des paliers (6), on monte un carter (8) de moteur de la propulsion (2) sur un arbre (10) de propulsion, comprenant :
- au moins un capteur (18) d'accélération, pour mesurer des accélérations dans trois directions orthogonales, ainsi que trois accélérations angulaires de la propulsion (2),
- par palier (6) étudié, au moins un capteur (20) de distance, pour déterminer une position relative de l'arbre (10) d'entraînement par rapport à un corps du palier (6) respectif,
- une unité (22) d'exploitation, constituée pour calculer, à l'aide de données du capteur (18) d'accélération, en connaissant le poids de la propulsion (2), les forces s'appliquant au palier (6) respectif, pour déterminer, à l'aide de la mesure du capteur (20) de distance, une répartition de ces forces sur les paliers (6) de la propulsion (2).

2. Système (4) suivant la revendication 1, dans lequel il est prévu un capteur (18) d'accélération à six axes, pour mesurer les accélérations de la propulsion (2).

3. Système (4) suivant la revendication 2, dans lequel le capteur (18) d'accélération est monté sur une partie immobile de la propulsion (2), notamment sur un stator (12).

4. Système (4) suivant l'une des revendications précédentes, dans lequel, par palier (6) étudié, deux capteurs de courant de Foucault sont prévus pour la mesure de la distance.

5. Système (4) suivant l'une des revendications précédentes, dans lequel l'unité (22) d'exploitation est constituée pour déduire, des informations détectées sur des modifications de force sur les paliers avec incorporation de données d'usure, une estimation de la durée de vie des paliers (6)

6. Procédé de contrôle de la charge sur des paliers (6) d'une propulsion (2) d'un bâtiment de navigation sur l'eau, notamment d'un bateau ou d'un sous-marin, dans lequel
- on recueille des données sur des accélérations dans trois directions orthogonales, ainsi que sur des accélérations angulaires de la propulsion (2), à l'aide d'au moins un capteur (18) d'accélération,
- par palier (6) étudié, on détermine, à l'aide d'au moins un capteur (20) de distance, la position relative d'un arbre (10) de propulsion, par rapport à un corps du palier (6) respectif et
- dans une unité (22) d'exploitation, à l'aide des données du capteur (18) d'accélération et en connaissant le poids de la propulsion (2), on calcule les forces s'appliquant au palier (6) respectif et, à l'aide de la mesure du capteur (20) de distance, on détermine une répartition de ces forces sur les paliers (6) de la propulsion (2).

7. Procédé suivant la revendication 6, dans lequel on recueille les données sur les accélérations au moyen d'un capteur (18) d'accélération à six axes.

8. Procédé suivant la revendication 7, dans lequel le capteur (18) d'accélération détecte les données sur les accélérations sur une partie immobile de la propulsion (2), notamment sur un stator (12).

9. Procédé suivant l'une des revendications 6 à 8, dans lequel, par palier (6) étudié, on utilise deux capteurs à courant de Foucault pour la mesure de distance.

10. Procédé suivant l'une des revendications 6 à 9, dans lequel, à partir des informations détectées sur des variations de force sur les paliers et en incorporant des données d'usure, on effectue une estimation de la durée de vie des paliers (6) au moyen de l'unité (22) d'exploitation.

11. Bâtiment de navigation sur l'eau, comprenant un système (4) suivant l'une des revendications 1 à 5.
